(19) **Europäisches Patentamt**
**European Patent Office**
**Office européen des brevets**

(11) **EP 2 869 196 A1**

(12) **EUROPEAN PATENT APPLICATION**
published in accordance with Art. 153(4) EPC

(43) Date of publication:
**06.05.2015 Bulletin 2015/19**

(21) Application number: **13808714.3**

(22) Date of filing: **27.06.2013**

(51) Int Cl.:
***G06F 9/48*** *(2006.01)*

(86) International application number:
**PCT/JP2013/067676**

(87) International publication number:
**WO 2014/003128 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.06.2012 JP 2012145892**
**29.01.2013 JP 2013014585**

(71) Applicant: **NTT DOCOMO, INC.**
**Chiyoda-ku,**
**Tokyo 100-6150 (JP)**

(72) Inventors:
• **KONISHI, Teppei**
**Tokyo 100-6150 (JP)**
• **INAMURA, Hiroshi**
**Tokyo 100-6150 (JP)**
• **KAMIYAMA, Takeshi**
**Tokyo 100-6150 (JP)**
• **KAWASAKI, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TASK CONTROL DEVICE**

(57)     Task control unit 310 executes a task according to execution request information for the task, which task is registered using a function provided by task control unit 310. Task control unit 310 separately controls a task (P-Task) whose execution time is set by a programmer and a task (S-Task) whose execution time is set by a system so that the tasks do not interfere with each other. Task control unit 310 executes plural S-Tasks while complying with their execution periods. By controlling tasks by the foregoing methods, energy is saved and a network load is reduced.

FIG. 1

EP 2 869 196 A1

**Description**

**Technical Field**

The present invention relates to control of tasks.

**Background Art**

In recent years, the number of information-processing devices installed with a multitasking OS (Operating System) capable of executing plural tasks simultaneously has increased. A smartphone is one such device. In a smartphone, tasks of application programs, even while a backlight of a liquid crystal screen of a device is turned off, require data synchronization with a server device or a processing relevant to a GPS (Global Positioning System) or a wireless LAN (Local Area Network), which results in a CPU frequently entering into an operating status, in contrast to a conventional portable device. Accordingly, a smartphone consumes much more power. Also, in a smartphone, the number of occurrences of wireless communication increases as a result of which the number of signals to be processed by a base station increases. Namely, a larger load is imposed on a base station and a mobile communication network by use of a smartphone. Further, due to simultaneous communication by plural smartphones (hereinafter referred to as "burst traffic"), a problem of a temporary overload on a base station or a mobile communication network occurs.

**Prior Art Document**

**Patent Document**

Patent Document 1: JP 8-255088 A1

**Summary of the Invention**

**Problems to be solved by the Invention**

Patent Document 1 discloses, as a technique for controlling plural tasks, a system where task execution requests are controlled by dividing tasks into tasks with a time interval specified and tasks with a particular time specified. However, the system only reduces the number of occurrences of a timer interruption by dividing tasks into two categories, which system is not effective in terms of power-saving and reduction of a network load.
In view of the above problem in the prior art, the present invention intends to reduce a processing load by controlling appropriately the tasks to be performed by a device.

**Means for Solving the Problems**

The present invention provides a task control device comprising a task control unit that executes a task of a first type, an execution time of which is not allowed to be changed, at a specified first time, and that executes a task of a second type, an execution time of which is allowed to be changed, at a second time different from the first time.
The task control unit may acquire execution request information including task identification information that identifies a subject task, an execution time of the subject task, and type information indicating whether the subject task is the first type or the second type. The task control unit may further determine whether the subject task is the first type or the second type based on the type information.
The task control unit may acquire execution request information including task identification information that identifies a subject task, an execution time of the subject task, and a type of the execution time of the subject task. The task control unit may further determine whether the subject task is the first type or the second type based on the type of the execution time.
The task control unit may comprises: a storage unit; and a storage processing unit that stores, for the task of the first type, data on the specified first time in the storage unit, and that sets, for the task of the second type, the second time different from the first time such that the task of the second type is executed simultaneously with another task of the second type, and stores data on the second time in the storage unit. The task control unit may further execute the task of the first type when the first time stored in the storage unit comes, and execute the task of the second type and the other task of the second type when the second time stored in the storage unit comes.
The storage processing unit, when the task of the second type is a periodic task, may set the second time such that the task of the second type is executed simultaneously with another task of the second type, which is a periodic task, wherein a common divisor exists between an execution period of the task of the second type and an execution period of the other task of the second type, and may store data on the second time in the storage unit.

The storage processing unit, when the task of the second type is a non-periodic task that does not cause a communication processing, may set the second time such that the task of the second type is executed simultaneously with another task of the first type.

The storage processing unit, when the task of the second type is a task that causes a communication processing, may set the second time based on a communication start time of the task of the second type such that communication caused by the task of the second type starts at the same time when communication caused by another task of the second type starts.

The task control unit may comprise: a storage unit; a storage processing unit that stores, in the storage unit, data on the first time specified for the task of the first type and data on an execution time specified for the task of the second type; and an execution unit that executes the task of the first type at the first time stored in the storage unit, and that, for the task of the second type, changes the execution time stored in the storage unit to the second time different from the first time such that the task of the second type is executed simultaneously with another task of the second type, and executes the task of the second type at the second time.

When the task control unit has transited from a dormant status to an operating status in response to a notification of an event to the task of the second type, and a time when the task control unit has transited from a dormant status to an operating status has passed an execution time specified for the task of the second type, the task control unit may set the execution time specified for the task of the second type to the second time, which is an execution time of another task of the second type, which is executed most recently subsequent to the time when the task control unit has transited from a dormant status to an operating status.

When the task control unit has transited from a dormant status to an operating status in response to a factor other than a request for executing the task of the second type and a notification of an event to the task of the second type, and a time when the task control unit has transited from a dormant status to an operating status has passed an execution time specified for the task of the second type, the task control unit may set the execution time specified for the task of the second type to the second time, which is an execution time of another task of the second type, which is executed most recently subsequent to the time when the task control unit has transited from a dormant status to an operating status.

The task control device may comprise a status management unit that manages a status of the task control device. The task control unit may determine, based on the status managed by the status management unit, whether to change the first time of the task of the first type or an execution time of the task of the second type, and thereafter executes the task of the first type or the task of the second type.

The task control device may comprise a control policy change unit that changes a control policy for the task control unit based on information input to the task control device. The task control unit may control execution of a task in accordance with the control policy changed by the control policy change unit.

The task control device may comprise a broadcast reception detection unit that detects a reception of broadcast information distributed to plural information-processing devices, one of which includes the task control device. When the broadcast reception detection unit has detected a reception of the broadcast information, and a time when the broadcast reception detection unit has detected the reception of the broadcast information has passed an execution time specified for the task of the second type, the storage processing unit may write, over the execution time specified for the task of the second type, the second time subsequent to the time when the broadcast reception detection unit has detected the reception of the broadcast information, and may store data on the second time in the storage unit.

The task control device may comprise a broadcast reception detection unit that detects a reception of broadcast information distributed to plural information-processing devices, one of which includes the task control device. When the broadcast reception detection unit has detected a reception of the broadcast information, and a time when the broadcast reception detection unit has detected the reception of the broadcast information has passed an execution time specified for the task of the second type, the storage processing unit may delete the execution time specified for the task of the second type.

**Effects of the Invention**

According to the present invention, a processing load is reduced by controlling tasks.

**Brief Description of the Drawings**

Fig. 1 is a block diagram showing a configuration of an information-processing device according to an embodiment of the present invention.

Fig. 2 is a block diagram showing a functional configuration of an information-processing device.

Fig. 3 is a sequence diagram showing a basic operation of an information-processing device.

Fig. 4A is a diagram showing a format example of execution request information.

Fig. 4B is a diagram showing a format example of execution request information.

Fig. 5 is a flowchart showing an operation of an information-processing device.

Fig. 6 is a flowchart showing an operation of an information-processing device.

Fig. 7 is a diagram explaining an operation example.

Fig. 8 is a diagram explaining an operation example.

Fig. 9 is a block diagram showing a functional configuration of an information-processing device according to a modification.

Fig. 10 is a diagram showing a format example of execution request information according to a modification.

Fig. 11 is a flowchart showing an operation of an information-processing device according to a modification.

Fig. 12 is a block diagram showing a functional configuration of an information-processing device according to a modification.

Fig. 13 is a block diagram showing a functional configuration of an information-processing device according to a modification.

Fig. 14 is a flowchart showing an operation of an information-processing device according to a modification.

Fig. 15 is a diagram explaining an operation example according to a modification.

Fig. 16 is a flowchart showing an operation of an information-processing device according to a modification.

Fig. 17 is a block diagram showing a functional configuration of an information-processing device according to a modification.

Fig. 18 is a block diagram showing a functional configuration of an information-processing device according to a modification.

Fig. 19 is a flowchart showing an operation of an information-processing device according to a modification.

**Description of Reference Numerals**

100 ··· Information-processing device, 310 ··· Task control unit, 311 ··· Storage processing unit, 312 ··· Storage unit, 313 ··· Execution unit, 314 ··· Status management unit, 315 ··· Execution history storage unit, 316 ··· Execution history monitoring unit, 317 ··· Broadcast reception detection unit, 331 ··· Control policy change unit, 1000 ··· Server device, 1100 ··· Application list, 1200 ··· Conversion rule.

**Modes for Implementing the Invention**

A preferred embodiment of an information-processing device according to the present invention will be described in detail below with reference to the drawings.

<Configuration>

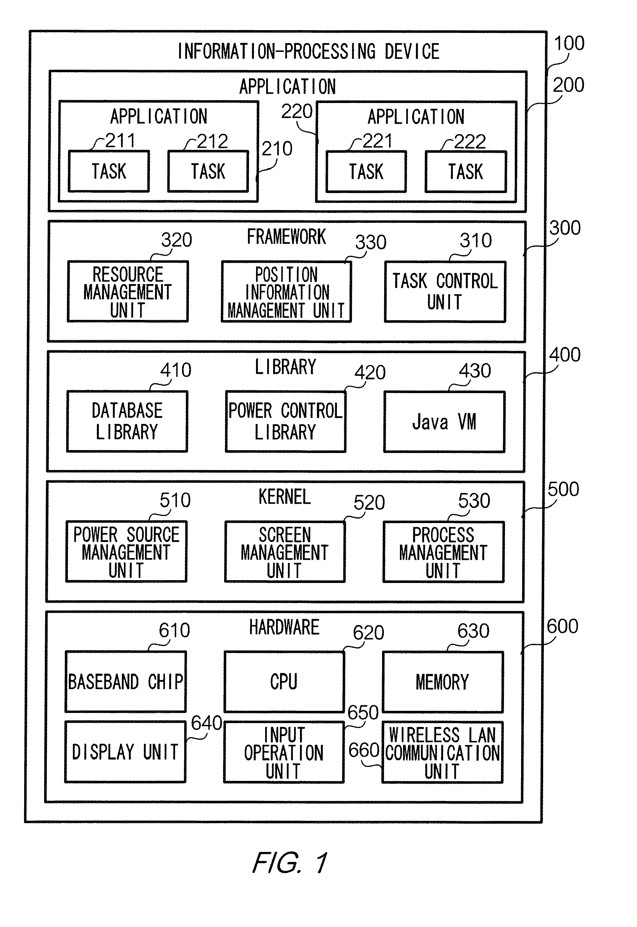

Fig. 1 shows a configuration example of information-processing device 100 according to an embodiment. Information-processing device 100 is a computer such as a mobile phone capable of telephone calling and data communication. Information-processing device 100 performs a telephone call or data communication with another mobile communication device or a server device via a mobile communication network. Information-processing device 100 corresponds to a task control device according to the present invention. Information-processing device 100 includes application 200, framework 300, library 400, kernel 500, and hardware 600. Application 200 includes, for example, application 210 including task 211 and task 212, and application 220 including task 221 and task 222. Framework 300 includes, for example, task control unit 310, resource management unit 320, and position information management unit 330. Task control unit 310 executes task 211 or 212 according to a request for executing task 211 or 212. Resource management unit 320 manages resources such as a CPU and a main memory. Position information management unit 330 manages positions of information-processing device 100. Library 400 includes, for example, database library 410, power control library 420, and Java (Registered Trademark) VM (Virtual Machine) 430. Kernel 500 includes power source management unit 510, screen management unit 520, and process management unit 530. Power source management unit 510 manages the power source of information-processing device 100. Screen management unit 520 manages display unit 640. Process management unit 530 manages processes of information-processing device 100. Hardware 600 includes, for example, baseband chip 610, CPU (Central Processing Unit) 620, memory (main storage and auxiliary storage) 630, display unit 640, input operation unit 650, and wireless LAN communication unit 660.

Task control unit 310 executes a task according to execution request information for the task, which task is registered using a function provided by task control unit 310. Execution request information for a task includes an execution time at which the task should be executed, and a set time type. The set time type indicates whether the execution time is an execution time set by a programmer or a user (hereinafter referred to as "programmer" collectively) or an execution time set by the system of information-processing device 100.

A task whose execution time is set by a programmer, which is a first task according to the present invention, and is hereinafter referred to as a "P-Task," may include an alarm clock task. The alarm clock task is a task that operates at an execution time (for example, 7 am every day) specified by a user among times prepared by a programmer. A P-Task is not executed at a time different from a set execution time. In other words, a P-Task is a task designed so that changing its specified execution time is not permitted.

On the other hand, a task whose execution time is optimized by the system regardless of an execution time specified by a programmer, which is a second task according to the present invention, and is hereinafter referred to as an "S-Task." An S-Task can be divided broadly into two types of tasks, tasks whose execution time is periodic and tasks whose execution time is not periodic. A periodic task may include a task, "Keep Alive," that maintains a session of communication performed between information-processing device 100 and a server device over a mobile communication network. Since a session with a server device is maintained as long as the task is executed periodically, the task is not required to be executed at a particular time such as 7 am every day. Accordingly, the decision as to what the initial execution time for the task should be can be made by the system as required. The task may be executed periodically at the decided execution time. A non-periodic task has no restriction as to its execution time such that the task may be executed any time. Accordingly, the execution time for the task may be decided by the system as required. As described in the foregoing, an S-Task is a task that may operate at a time other than a particular time, and which is designed so that a time specified by a programmer is permitted to be changed.

<Basic Operation>

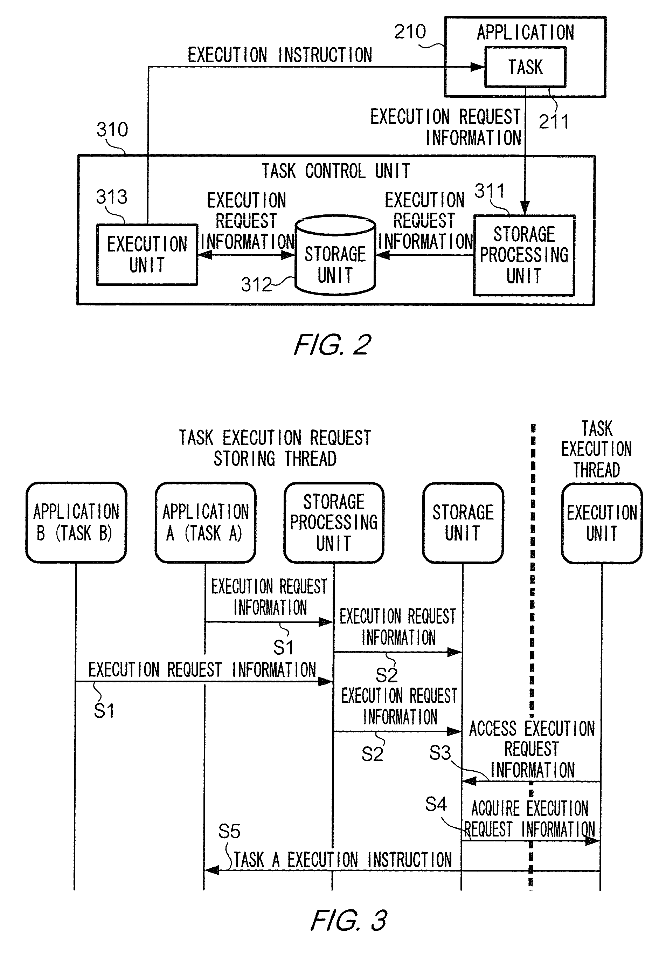

Fig. 2 is a diagram showing a functional configuration example of the information-processing device. Fig. 3 is a sequence diagram showing a basic operation of the information-processing device. Task control unit 310 includes storage processing unit 311, storage unit 312, and execution unit 313. Storage unit 312 is realized by memory 630. Storage processing unit 311 and execution unit 313 are realized by CPU 620. As shown in Fig. 3, during execution of each application (application A or application B), each task (task A or B) calls a function of task control unit 310, and passes execution request information, which is an argument, to the function, so that storage processing unit 311 acquires the execution request information (step S1). Storage processing unit 311 sequentially stores the execution request information in storage unit 312 (step S2). The foregoing describes a task execution request storing thread.

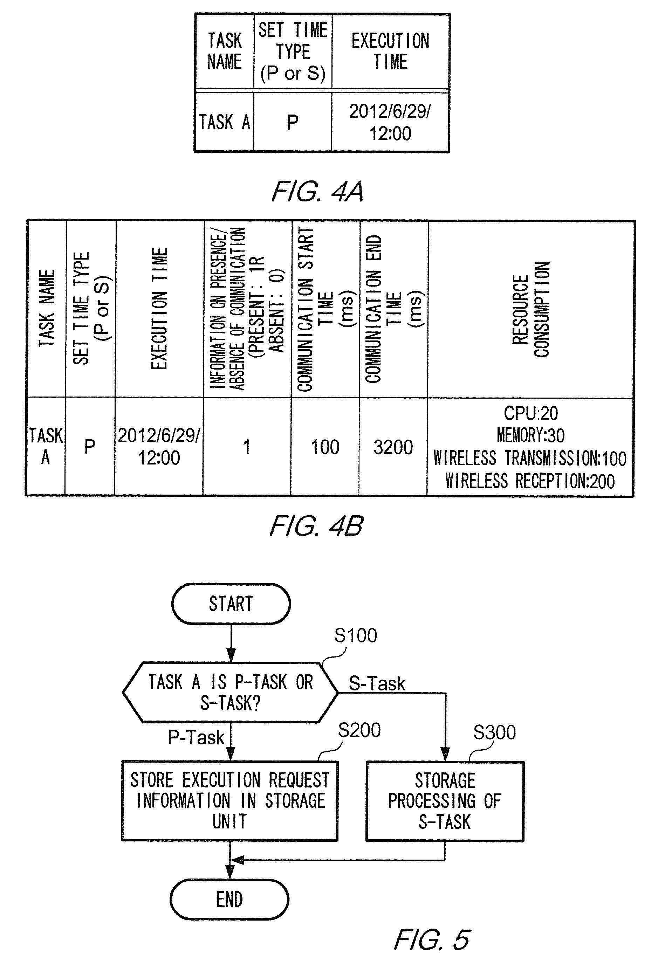

Now, Fig. 4 is referred to, which shows format examples of execution request information. As shown in Fig. 4A, execution request information includes information on a task name, a set time type (P-task or S-task), and an execution time. The task name is an example of identification information of a task. As shown in Fig. 4B, execution request information may include, in addition to data on a task name, a set time type (P-task or S-task), and an execution time, information on presence/absence of communication, a communication start time, a communication end time, and resource consumption.

On the other hand, a task execution thread starts in response to a transition of execution unit 313 from a dormant status (or sleep status) to an operating status. Execution unit 313 accesses execution request information stored in storage unit 312 (step S3), and confirms the execution request information (step S4). Conditions in which execution unit 313 transits from a dormant status to an operating status include (1) a request for execution of a task, (2) a notification of an event relevant to a change in remaining battery level or to a network condition, and (3) a condition other than conditions (1) and (2) (for example, a condition relevant to device management by the kernel, or an input operation to input operation unit 650). Execution unit 313, if as a result of the confirmation of the execution request information, condition (1) is satisfied, issues an execution instruction to application A to execute a task (shown as task A in Fig. 3) that triggered the activation of execution unit 313 (step S5). As a result, task A is executed.

<Operation of Storage Processing Unit>

An operation performed by storage processing unit 311 to store execution request information in storage unit 312 will be described with reference to Fig. 5. When task A of application A calls a function of storage processing unit 311, and execution request information is passed to storage processing unit 311 as an argument, storage processing unit 311 determines whether the type of task A is a P-Task or an S-Task (step S100). If the type of task A is a P-Task (step S100; P-Task), storage processing unit 311 stores the execution request information held by task A in storage unit 312 (step S200). If the type of task A is an S-Task (step S100; S-Task), storage processing unit 311 performs a storage processing for an S-Task (step S300).

<Storage Processing for S-Task>

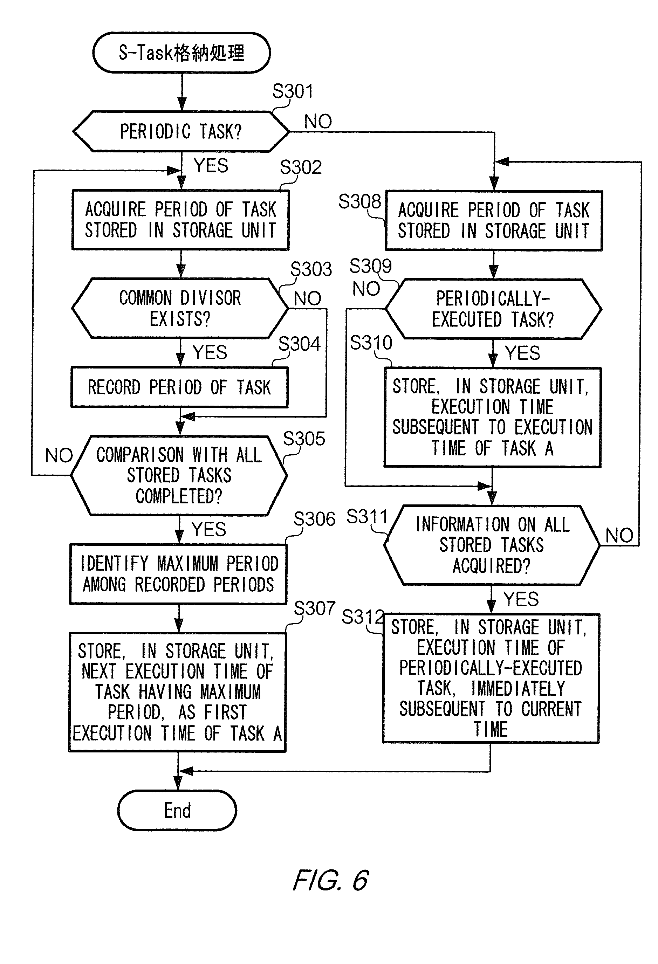

The storage processing for an S-Task will be described with reference to Figs. 6 to 8. Storage processing unit 311 initially determines whether task A is a periodic task (step S301). If task A is a periodic task (step S301; YES), storage processing unit 311 acquires data on a period of execution request information stored in storage unit 312 (step S302), and determines whether a common divisor larger than a minimum unit of a period (for example, 1 minute) exists between the period of the execution request information and a period of task A (step S303). If the common divisor exists (step S303; YES), storage processing unit 311 records the period of the execution request information in memory 630 (step S304).

If the common divisor does not exist (step S303; NO), storage processing unit 311 determines whether comparison with all tasks stored in storage unit 312 has been completed (step S305). If a task to be compared exists in storage unit 312 (step S305; NO), storage processing unit 311 returns to step S302 to perform the above-mentioned processing. If comparison with all tasks has been completed (step S305; YES), storage processing unit 311 identifies the maximum period among periods recorded in step S304 (step S306). Subsequently, storage processing unit 311 stores execution request information for task A in storage unit 312, in which a next execution time of a task having the maximum period is specified as a first execution time of task A (step S307).

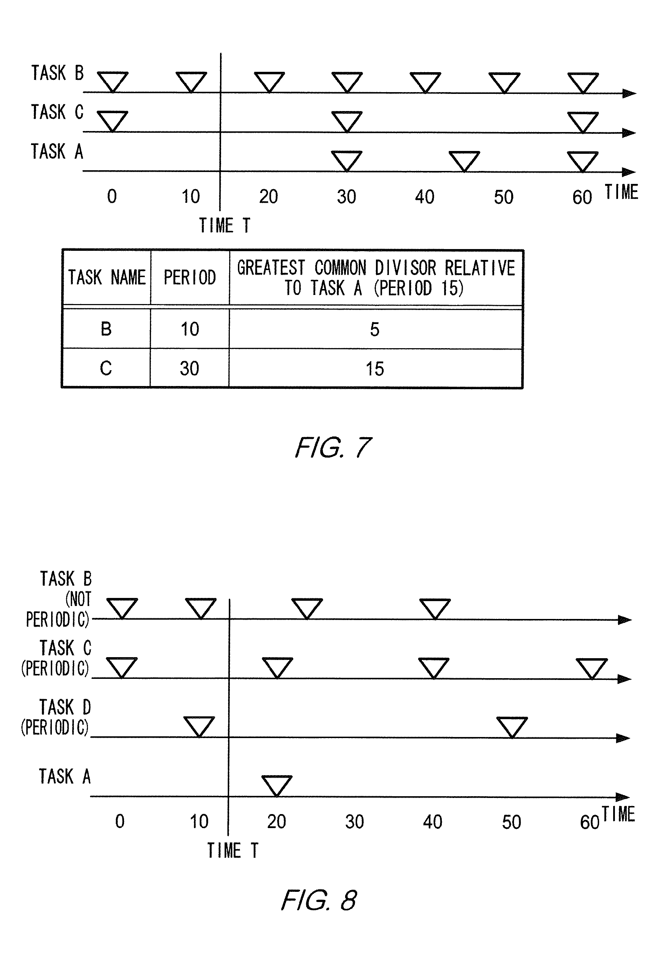

A processing example of steps S301 to S307 will be described with reference to Fig. 7. It is assumed that in a case where execution request information for task B having a period "10" and execution request information for task C having a period "30" are stored in storage unit 312, execution request information for task A having a period "15" is generated at time T. In the case, the greatest common divisor between the period of task A and the period of task B is "5," and the greatest common divisor between the period of task A and the period of task C is "15;" accordingly, a next execution time "30" is specified as a first execution time of task A.

Fig. 6 is referred to again. If task A is a non-periodic task (step S301; NO), storage processing unit 311 acquires data on a period of a task included in execution request information stored in storage unit 312 (step S308), and determines whether the task is a periodic task (S309). If the task is a periodic task (step S309; YES), storage processing unit 311 records, in memory 630, an execution time of the task, which is subsequent to the current time and is most recent (step S310). If a task exists in storage unit 312 whose information is not yet acquired (step S311; NO), storage processing unit 311 returns to step S308 to perform the above-mentioned processing. If information on all tasks has been acquired (step S311; YES), storage processing unit 311 stores execution request information for task A in storage unit 312, in which an execution time closest to the current time among execution times recorded in step S310 is specified as a first execution time of task A.

A processing example of steps S308 to S312 will be described with reference to Fig. 8. It is assumed that in a case where execution request information for tasks B, C, and D is stored in storage unit 312, execution request information for task A is generated at time T. It is also assumed that an execution time of tasks C and D is periodic, and an execution time of task B is not periodic. In this case, since task B is not a periodic task, storage processing unit 311 moves from step S309 to step S311. Since data on periods of all tasks is not yet acquired (step S311; NO), storage processing unit 311 returns to step S308 to determine whether task C is a periodic task. Since task C is a period task, storage processing unit 311 stores, in memory 630, data of the most recent next execution time "20" of task C in step S310. Similarly, storage processing unit 311 stores, in the memory, data of the most recent next execution time "50" of task D. Storage processing unit 311 compares the next execution times "20" and "50" stored in the memory in step S312, and stores data of the smaller next execution time "20" in storage unit 312 as a first execution time of task A.

After the execution request information is stored in storage unit 312 as described in the foregoing, when the execution time included in the execution request information comes, execution unit 313 executes task A.

<Modifications>

The above embodiment may be modified as described below. The following modifications may be combined with each other.

<Modification 1>

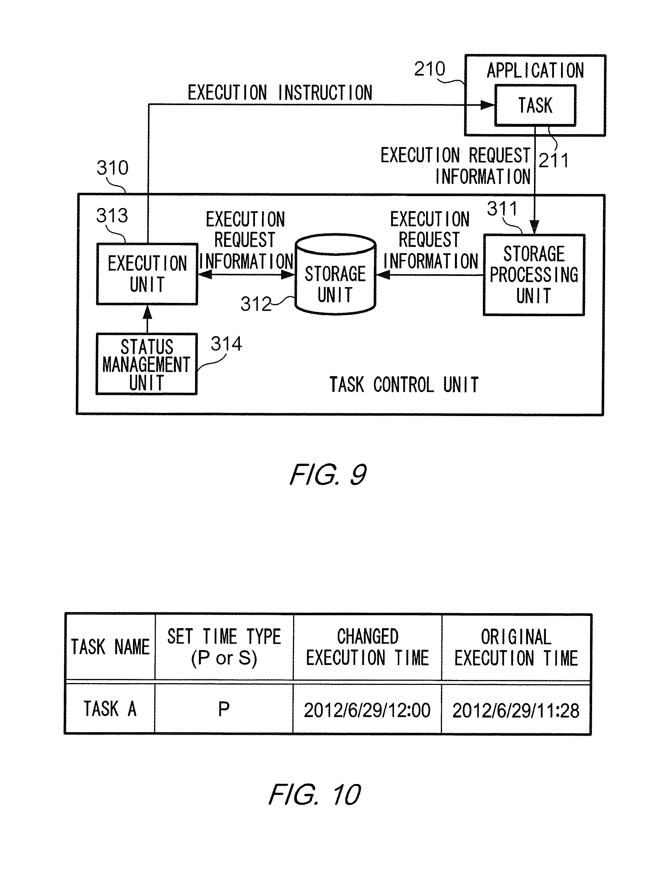

In the embodiment, in a case where information-processing device 100 transits from a dormant status to an operating status in a condition that execution of a task has been requested, the task that triggered the activation is executed. However, execution unit 313 may acquire information on a status of information-processing device 100 (for example, information on whether a backlight of the display unit of a device is in an on-state or an off-state, a remaining battery level, a resource consumption amount, a network condition, or whether the information-processing device is connected or disconnected to a power cable) from an API (Application Program Interface) provided by the framework, and control executions of tasks based on the status information. In this case, task control unit 310 includes status management unit 314 that manages status information, as shown in Fig. 9. Status management unit 314 is realized by CPU 620 and memory 630. Fig. 10 is a diagram showing a format example of execution request information stored in storage unit 312. Since a task may be executed at an original execution time, without modification, depending on a status of information-processing device 100, data on the original execution time and a changed execution time of the task is stored in storage unit 312. Task control unit 310 selects one of the execution times to execute the task, based on a determination whether simultaneous execution of tasks should be performed.

In a case where information on whether display unit 640 is in an on-state or an off-state is referred to as status information, task control unit 310 does not perform simultaneous execution of tasks when display unit 640 is in an on-state, and performs simultaneous execution of tasks when display unit 640 is in an off-state. When display unit 640 is in an on-state, it is likely that a user is viewing display unit 640 for, for example, web browsing; therefore, high responsiveness of a processing to an input operation is required. If tasks are simultaneously executed in such a situation, responsiveness of execution of a task is lowered; as a result, usability of a device for a user is likely to be lowered. On the other hand, when display unit 640 is in an off-state, it is likely that a user is not viewing display unit 640; therefore, high responsiveness of a processing to an input operation is not required. Accordingly, when display unit 640 is in an off-state, it is preferable that an execution time of a task is changed so that tasks are simultaneously executed to save energy and to reduce network load.

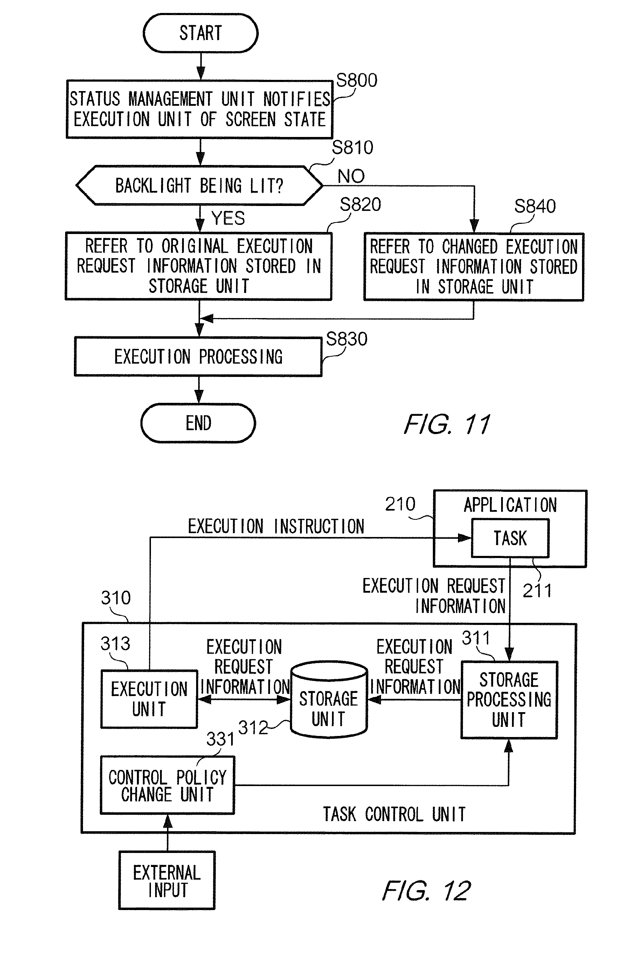

As shown in Fig. 11, status management unit 314 notifies execution unit 313 of whether display unit 640 is in an on-state or an off-state (step S800), and execution unit 313 determines whether display unit 640 is in an on-state or an off-state (step S810). If display unit 640 is in an on-state (step S810; YES), execution unit 313 refers to data of an original execution time stored in storage unit 312 (step S820), and performs an execution processing at the execution time (step S830). On the other hand, if display unit 640 is in an off-state (step S810; NO), execution unit 313 refers to data of a changed execution time stored in storage unit 312 (step S840), and performs an execution processing at the execution time (step S830).

In a case where an amount of resources consumed by information-processing device 100 when a task is executed is referred to as status information, and where a total amount of resources consumed by tasks to be simultaneously executed exceeds a threshold value, task control unit 310 excludes task(s) that consumes a larger amount of resources from tasks subjected to simultaneous execution so that the total amount of resources consumed does not become greater than the threshold value. If a data amount exceeds the capacity of a main memory, tasks are likely to freeze or crash. Therefore, in the case where the total amount of resources consumed exceeds the threshold value, the number of tasks subjected to simultaneous execution should be reduced. Information on a resource consumption amount for each task may be pre-included in execution request information for the task, which is referred to by task control unit 310. Alternatively, a resource consumption amount for each task may be learned by task control unit 310 by monitoring resources consumed when the task is executed.

Information relevant to a network such as a radio wave reception intensity or a communication throughput in communication with a base station of a mobile communication network or in a wireless LAN may be used as status information. In the case, task control unit 310, if determining that an extra communication band is available, may increase the number of tasks to be simultaneously executed.

A remaining battery level may be referred to as status information. In the case, when a remaining battery level is lower than or equal to a threshold value, task control unit 310 performs simultaneous execution of tasks to save power. The threshold value may be set by a user, or may be automatically set by the system of information-processing device 100.

Whether information-processing device 100 is connected to a power cable connected to a commercial power source may be referred to as status information. In the case, when information-processing device 100 is disconnected from the power cable, task control unit 310 performs simultaneous execution of tasks to save power.

<Modification 2>

In modification 1, it is decided whether to change an execution time of a task so that tasks are simultaneously executed, depending on a status of information-processing device 100. In the present modification, a control policy may be changed based on external input information, which cannot be acquired from the inside of information-processing device 100, so that control can be performed reflecting an intention of a user or a developer, a network condition, or a status of another information-processing device. In this case, task control unit 310 includes control policy change unit 331 that changes a control policy based on external input information, as shown in Fig. 12. Control policy change unit 331 is realized by CPU 620 and memory 630. In modification 2, since a task may be executed at an original execution time, without modification, depending on a control policy, data on the original execution time and a changed execution time of the task is stored in storage unit 312, as in the case of modification 1.

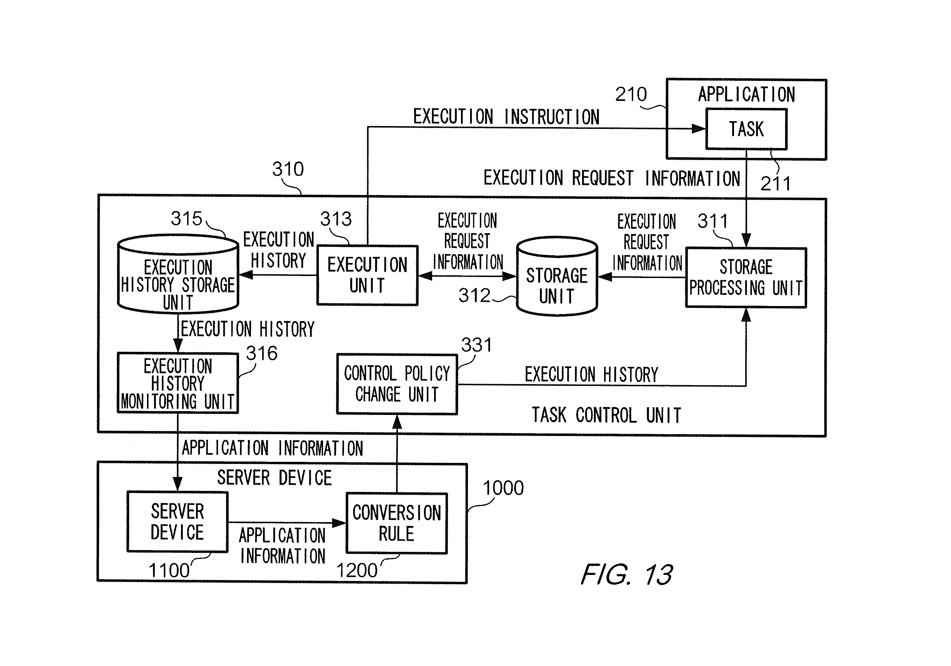

Control policy change unit 331 may convert a control policy according to conversion rule 1200 for execution request information, as shown in Fig. 13, which rule is directed to execution request information for applications stored in server device 1000. Data on a history (for example, a task name, an execution time, and presence/absence of communication) of executions of a task by execution unit 313 is stored in execution history storage unit 315, and execution history monitoring unit 316 monitors the execution history. Execution history monitoring unit 316 determines whether a task or application tends not to be executed at a particular time, or whether a task or application tends to be updated frequently. If such a tendency is identified, execution history monitoring unit 316 registers a name of a task or application, and execution request information in application list 1100 of server device 1000. Server device 1000 changes conversion rule 1200 based on the registered information. For example, if an application performs communication intensively at a particular time, a control policy is changed so that communication is avoided at the time. After conversion rule 1200 is updated, server device 1000 changes control policies for all information-processing devices 100. It is to be noted that execution history storage unit 315 is realized by memory 630, and execution history monitoring unit 316 is realized by CPU 620.

In the above example, execution history monitoring unit 316 registers a name of a task or an application, and execution request information in application list 1100 of server device 1000; however, those pieces of information may be registered by a user in application list 1100 of server device 1000. It is to be noted that conversion rule 1200 and application list 1100 may be held by each information-processing device 100, based on which information-processing device 100 may control tasks.

Control policy change unit 331 may communicate with a base station or an exchange of a mobile communication network to change an execution time of a task so that communication is not performed intensively at a particular time. For example, in a case where a base station or an exchange identifies occurrence of burst traffic at 7 am every day, an execution time of a task that performs communication at 7 am may be changed in some information-processing devices 100 to prevent the devices from executing the task at 7 am.

In a case where a developer tests an application at a developmental stage, information-processing device 100 may execute a task at an original execution time, without changing the execution time. In this case, an application may be attached with a flag indicating that the application is under development, so that it can be determined that the application is for testing, and task control unit 310 may be provided with a function by which an execution time of an application attached with such a flag is not changed.

<Modification 3>

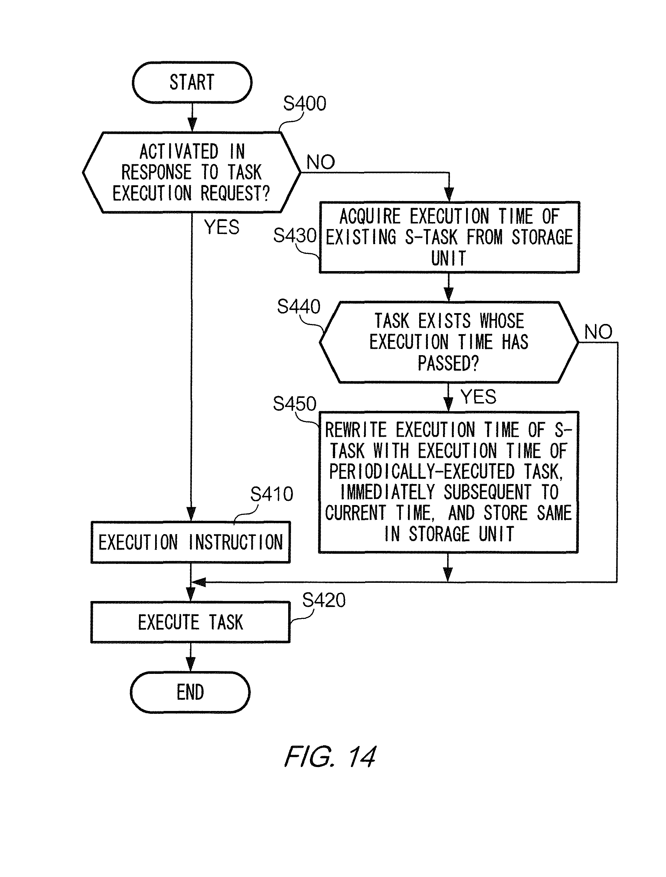

In the embodiment, storage processing unit 311 changes an execution time of a task, and thereafter stores data on the changed execution time in storage unit 312. However, storage processing unit 311 may store data on an execution time of a task in storage unit 312, without changing the execution time, and execution unit 313 may change the execution time before executing the task. In the case, in Fig. 14, when execution unit 313 transits from a dormant status to an operating status, execution unit 313 acquires execution request information from storage unit 312 to determine whether a task set to the same time as the current time exists (step S400). If a task set to the same time as the current time exists (namely, execution unit 313 has transited from a dormant status to an operating status in a condition that execution of the task had been requested) (step S400; YES), execution unit 313 issues an execution instruction to execute the task (step S410), and executes the task (step S420). On the other hand, if a task set to the same time as the current time does not exist (namely, execution unit 313 has transited from a dormant status to an operating status in a condition other than the condition that execution of the task had been requested) (step S400; NO), execution unit 313 acquires execution request information for an S-Task stored in storage unit 312 (step S430). If an S-Task whose execution time has passed exists (step S440; YES), execution unit 313 rewrites, over an execution time of the S-Task, an execution time of a periodic task, which is subsequent to the current time and is most recent, and stores data on the rewritten execution time in storage unit 312 (step S450). According to the foregoing processing, in a case where transition to an operating status of information-processing device 100 is triggered by an event notification to a task or a factor other than a request for executing a task or an event notification, distributed execution of tasks can be avoided; in other words, simultaneous execution of tasks tends to be performed.

<Modification 4>

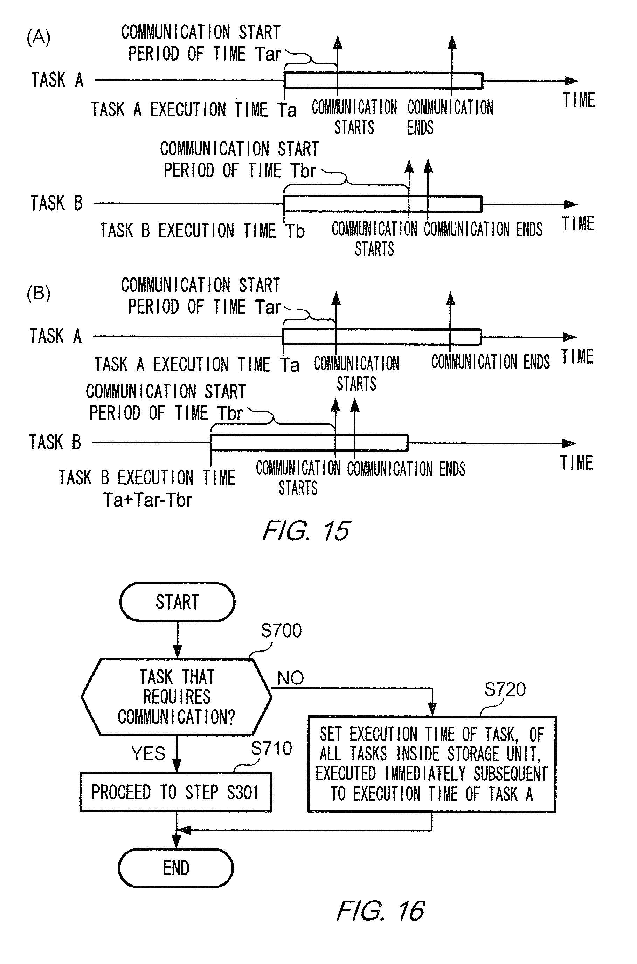

In the embodiment, plural tasks are simultaneously executed by making their execution times the same. However, in some tasks, a communication processing occurs several seconds to several tens of seconds after the task is executed. For example, as shown in Fig. 15, a case can be considered where execution times of task A and task B are the same; however, communication start times are different so that the number of generations of a control signal is not reduced. In view of that, when executing plural tasks simultaneously, task control unit 310 may change execution times of the tasks to make them the same. In this case, a communication start time of a task may be included in request execution information, which can be referred to by task control unit 310. Alternatively, a communication start time may be calculated by task control unit 310 based on execution history information in which communication start times of tasks are described. For example, assuming that an execution time of task A is "Ta," and a communication start period of time of task A is "Tar," a communication start time of task A is "Ta+Tar." Assuming that an execution time of task B is "Tb", and a communication start period of time of task B is "Tbr," a communication start time of task B is "Tb+Tbr." In a case where task A is stored in storage unit 312 in advance, storage processing unit 311 changes the execution time of task B to "Ta+Tar-Tbr," and stores data on the changed execution time in storage unit 312. Information indicating a communication start time of a task may be pre-included in execution request information of the task, which can be referred to by task control unit 310. Alternatively, a communication start time may be learned by task control unit 310 by monitoring a status of communication performed when a task is in execution.

<Modification 5>

In the embodiment, only S-Tasks are simultaneously executed to avoid occurrence of burst traffic. However, a combination of an S-Task (that does not perform communication) and a P-Task, if simultaneously executed, does not cause burst traffic. In the present modification, as shown in Fig. 16, storage processing unit 311 determines whether task A is a task that performs communication (step S700). If task A is a task that does not perform communication (step S700; NO), storage processing unit 311 sets, as an execution time of task A, an execution time of a task (among all tasks), which is subsequent to the execution time of task A and is most recent, regardless of whether task A is a P-Task or an S-Task (step S720). On the other hand, if task A is a task that performs communication (S700; YES), storage processing unit 311 proceeds to step S301 of Fig. 6 so that S-Tasks are simultaneously executed, as in the case of the embodiment (step S710).

<Modification 6>

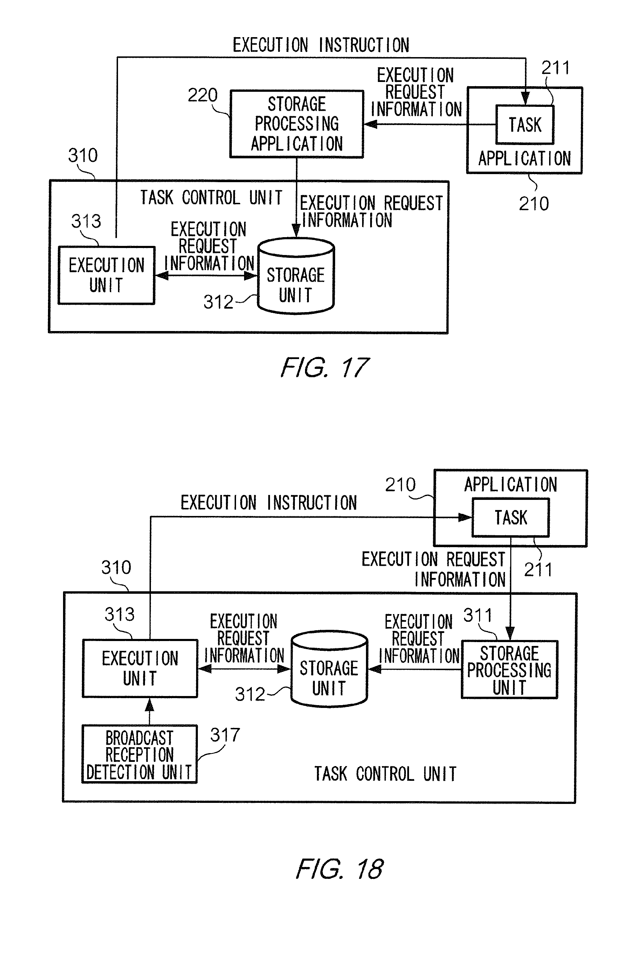

In the embodiment, where an execution time of a task is changed by storage processing unit 311 of framework 300, storage processing unit 311 may be realized by an application program. In this case, storage processing application 220 that realizes a function equivalent to that of storage processing unit 311 may be provided, instead of storage processing unit 311, as shown in Fig. 17. Storage processing application 220 receives execution request information from all or some of the tasks, and performs step S100 and subsequent steps of the embodiment.

<Modification 7>

Information-processing device 100 may be a stand-alone information-processing device, instead of a communication device such as a mobile phone. A program executed in information-processing device 100 may be stored for distribution in a recording medium such as a magnetic tape, a magnetic disk, a floppy (Registered Trademark) disk, an optical recording medium, a magneto-optical medium, a CD (Compact Disk), a DVD (Digital Versatile Disk), or a RAM.

<Modification 8>

When plural information-processing devices 100, during a sleep or dormant status, receive information that is simultaneously distributed over a communication network such as a message reporting the occurrence of an emergency situation such as an earthquake (or an emergency earthquake alert) (which reception will be referred to as "broadcast reception"), information-processing devices 100 simultaneously transit from the dormant status to an operating status, and may display a message. After transiting to the operating status, plural information-processing devices 100 execute a task to be executed, if any. In the case, if an S-Task that performs communication is executed simultaneously in plural information-processing devices 100, burst traffic may occur. To prevent the occurrence of burst traffic, task control unit 310 includes broadcast reception detection unit 317 that detects a broadcast reception, as shown in Fig. 18. If a broadcast reception is detected by broadcast reception detection unit 317, storage processing unit 311 may rewrite an execution time included in execution request information for an S-Task stored in storage unit 312. The operation will be described below.

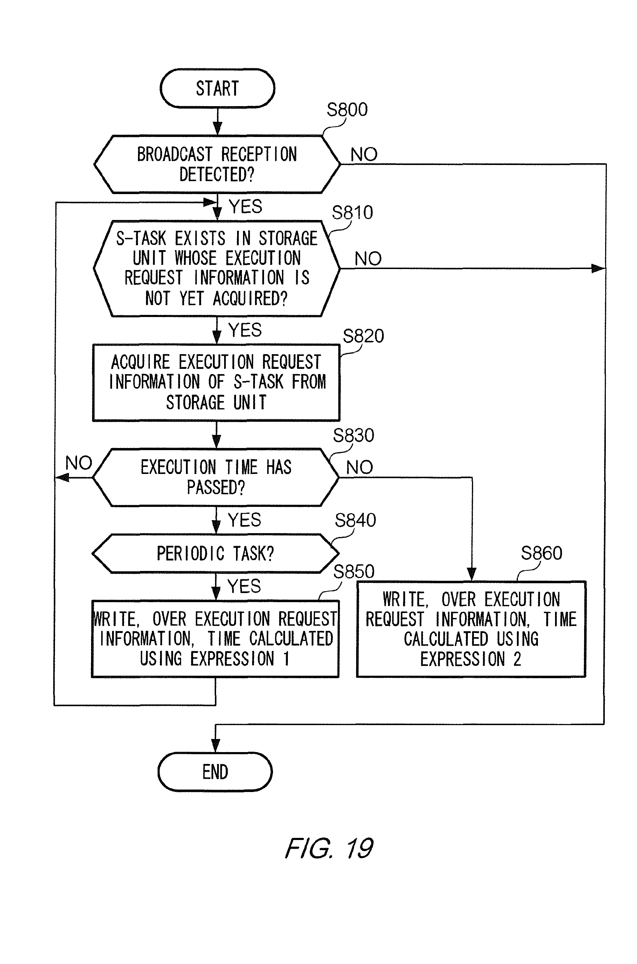

In Fig. 19, when broadcast reception detection unit 314 detects a broadcast reception (step S800; YES), storage processing unit 311 determines whether execution request information for an S-Task not yet acquired exists in storage unit 312 (step S810). If execution request information for an S-Task not yet acquired exists (step S810; YES), storage processing unit 311 acquires the execution request information (step S820), and determines whether the current time has passed an execution time (step S830). Since an S-Task is a task whose execution time is optimized by the system, as described above, an S-Task may not be executed after a lapse of an execution time included in execution request information while execution unit 313 is in a dormant status. A non-periodic task is not executed after a lapse of an execution time while execution unit 313 is in a dormant status. Even a periodic task, whose next execution time is set, may not necessarily be executed exactly at its execution time as long as the task is periodically executed. In the present modification, such a task is deemed to be an S-Task. In step S830, such a task is searched for.

If the current time has passed the execution time (step S830; YES), storage processing unit 311 determines whether the task is a periodic task (step S840). If the task is a periodic task (step S840; YES), storage processing unit 311 rewrites, over the execution time of the execution request information acquired in step S820, a time obtained from following expression 1, and stores the rewritten execution request information in storage unit 312 (step S850).

$$NewSetTime = setTime + count \times interval. \cdots \text{ expression } 1$$

Therein, count = 1 + (now - setTime) / interval [therein, (now - setTime) / interval is a value calculated as an integer value];
newSetTime: a new execution time that is written over an old execution time;
setTime: an execution time included in execution request information to be overwritten acquired in step S820;
interval: a period of a task identified in execution request information to be overwritten acquired in step S820; and
now: a time when a broadcast reception has been detected (namely, a current time).

For example, in a case where now = 18:00, setTime = 17:55, and interval = 15 (minutes), (now - setTime) / interval = 5/15; however, since (now - setTime) / interval has to be an integer value as described above, a resulting value is "0." Count = 1 + 0 = 1. NewSetTime = setTime + count x interval = 17:55 + 1 x 15 (minutes) = 18:10. NewSetTime is always a value subsequent to a current time i.e., now.

On the other hand, if the task is not a periodic task (step S840; NO), storage processing unit 311 rewrites, over the execution time of the execution request information acquired in step S820, a time obtained from following expression 1, and stores the rewritten execution request information in storage unit 312 (step S860).

$$NewSetTime = setTime + count \times t. \cdots \text{ expression } 2$$

Therein, count = 1 + (now - setTime) / t [therein, (now - setTime) / t is a value calculated as an integer value];
newSetTime: a new execution time that is written over an old execution time;
setTime: an execution time included in execution request information to be overwritten acquired in step S820;
t: a predetermined time (for example, 15 minutes); and
now: a time when a broadcast reception has been detected.

For example, in a case where now = 18:00, setTime = 17:55, t = 10 (minutes), (now - setTime) / t = 5 / 10; however, since (now - setTime) / t has to be an integer value as described above, a resulting value is "0." Count = 1 + 0 = 1. NewSetTime = setTime + count x t = 17:55 + 1 x 10 (minutes) = 18:05. NewSetTime is always a value subsequent to a current time i.e., now.

Storage processing unit 311 calculates an execution time using expression 1 or 2 at step S850 or S860 because it is necessary to differentiate, in each information-processing device 100, an execution time of an S-Task subsequent to a time when a broadcast reception has been detected, so that occurrence of burst traffic is prevented. Any other algorithm may be used, instead of expression 1 or 2, whereby an execution time can be adequately differentiated in each information-processing device 100.

Storage processing unit 311 may, instead of overwriting an execution time of an S-Task whose execution time has passed, as described above, delete the execution time. If an execution time of a task is deleted, the task is not executed; however, such a measure may be employed in a case where preventing occurrence of burst traffic is emphasized.

**Claims**

1. A task control device comprising a task control unit that executes a task of a first type, an execution time of which is not allowed to be changed, at a specified first time, and that executes a task of a second type, an execution time of which is allowed to be changed, at a second time different from the first time.

2. The task control device according to Claim 1, wherein:

   the task control unit acquires execution request information including task identification information that identifies a subject task, an execution time of the subject task, and type information indicating whether the subject task is the first type or the second type; and
   the task control unit determines whether the subject task is the first type or the second type based on the type information.

**3.** The task control device according to Claim 1, wherein:

the task control unit acquires execution request information including task identification information that identifies a subject task, an execution time of the subject task, and a type of the execution time of the subject task; and the task control unit determines whether the subject task is the first type or the second type based on the type of the execution time.

**4.** The task control device according to any one of Claims 1 to 3, wherein:

the task control unit comprises:

a storage unit; and
a storage processing unit that stores, for the task of the first type, data on the specified first time in the storage unit, and that sets, for the task of the second type, the second time different from the first time such that the task of the second type is executed simultaneously with another task of the second type, and stores data on the second time in the storage unit, wherein the task control unit executes the task of the first type when the first time stored in the storage unit comes, and executes the task of the second type and the other task of the second type when the second time stored in the storage unit comes.

**5.** The task control device according to Claim 4, wherein the storage processing unit, when the task of the second type is a periodic task, sets the second time such that the task of the second type is executed simultaneously with another task of the second type, which is a periodic task, wherein a common divisor exists between an execution period of the task of the second type and an execution period of the other task of the second type, and stores data on the second time in the storage unit.

**6.** The task control device according to any one of Claim 4 or 5, wherein the storage processing unit, when the task of the second type is a non-periodic task that does not cause a communication processing, sets the second time such that the task of the second type is executed simultaneously with another task of the first type.

**7.** The task control device according to any one of Claims 4 to 6, wherein the storage processing unit, when the task of the second type is a task that causes a communication processing, sets the second time based on a communication start time of the task of the second type such that communication caused by the task of the second type starts at the same time when communication caused by another task of the second type starts.

**8.** The task control device according to any one of Claims 1 to 3, wherein:

the task control unit comprises:

a storage unit;
a storage processing unit that stores, in the storage unit, data on the first time specified for the task of the first type and data on an execution time specified for the task of the second type; and
an execution unit that executes the task of the first type at the first time stored in the storage unit, and that, for the task of the second type, changes the execution time stored in the storage unit to the second time different from the first time such that the task of the second type is executed simultaneously with another task of the second type, and executes the task of the second type at the second time.

**9.** The task control device according to any one of Claims 1 to 8, wherein when the task control unit has transited from a dormant status to an operating status in response to a notification of an event to the task of the second type, and a time when the task control unit has transited from a dormant status to an operating status has passed an execution time specified for the task of the second type, the task control unit sets the execution time specified for the task of the second type to the second time, which is an execution time of another task of the second type, which is executed most recently subsequent to the time when the task control unit has transited from a dormant status to an operating status.

**10.** The task control device according to any one of Claims 1 to 9, wherein when the task control unit has transited from a dormant status to an operating status in response to a factor other than a request for executing the task of the second type and a notification of an event to the task of the second type, and a time when the task control unit has transited from a dormant status to an operating status has passed an execution time specified for the task of the second type, the task control unit sets the execution time specified for the task of the second type to the second time, which is an execution time of another task of the second type, which is executed most recently subsequent to the time when the task control unit has transited from a dormant status to an operating status.

11. The task control device according to any one of Claims 1 to 10, comprising a status management unit that manages a status of the task control device, wherein the task control unit determines, based on the status managed by the status management unit, whether to change the first time of the task of the first type or an execution time of the task of the second type, and thereafter executes the task of the first type or the task of the second type.

12. The task control device according to any one of Claims 1 to 11, comprising a control policy change unit that changes a control policy for the task control unit based on information input to the task control device, wherein the task control unit controls execution of a task in accordance with the control policy changed by the control policy change unit.

13. The task control device according to Claim 8, comprising a broadcast reception detection unit that detects a reception of broadcast information distributed to plural information-processing devices, one of which includes the task control device, wherein when the broadcast reception detection unit has detected a reception of the broadcast information, and a time when the broadcast reception detection unit has detected the reception of the broadcast information has passed an execution time specified for the task of the second type, the storage processing unit writes, over the execution time specified for the task of the second type, the second time subsequent to the time when the broadcast reception detection unit has detected the reception of the broadcast information, and stores data on the second time in the storage unit.

14. The task control device according to Claim 8, comprising a broadcast reception detection unit that detects a reception of broadcast information distributed to plural information-processing devices, one of which includes the task control device, wherein when the broadcast reception detection unit has detected a reception of the broadcast information, and a time when the broadcast reception detection unit has detected the reception of the broadcast information has passed an execution time specified for the task of the second type, the storage processing unit deletes the execution time specified for the task of the second type.

INFORMATION-PROCESSING DEVICE  100

APPLICATION  200

| APPLICATION  210 | 220 | APPLICATION  210 |
|---|---|---|
| TASK 211 | TASK 212 | | TASK 221 | TASK 222 |

FRAMEWORK  300

| RESOURCE MANAGEMENT UNIT 320 | POSITION INFORMATION MANAGEMENT UNIT 330 | TASK CONTROL UNIT 310 |
|---|---|---|

LIBRARY  400

| DATABASE LIBRARY 410 | POWER CONTROL LIBRARY 420 | Java VM 430 |
|---|---|---|

KERNEL  500

| POWER SOURCE MANAGEMENT UNIT 510 | SCREEN MANAGEMENT UNIT 520 | PROCESS MANAGEMENT UNIT 530 |
|---|---|---|

HARDWARE  600

| BASEBAND CHIP 610 | CPU 620 | MEMORY 630 |
|---|---|---|
| DISPLAY UNIT 640 | INPUT OPERATION UNIT 650 | WIRELESS LAN COMMUNICATION UNIT 660 |

*FIG. 1*

FIG. 2

FIG. 3

14

| TASK NAME | SET TIME TYPE (P or S) | EXECUTION TIME |
|---|---|---|
| TASK A | P | 2012/6/29/ 12:00 |

*FIG. 4A*

| TASK NAME | SET TIME TYPE (P or S) | EXECUTION TIME | INFORMATION ON PRESENCE/ ABSENCE OF COMMUNICATION (PRESENT: 1R ABSENT: 0) | COMMUNICATION START TIME (ms) | COMMUNICATION END TIME (ms) | RESOURCE CONSUMPTION |
|---|---|---|---|---|---|---|
| TASK A | P | 2012/6/29/ 12:00 | 1 | 100 | 3200 | CPU:20 MEMORY:30 WIRELESS TRANSMISSION:100 WIRELESS RECEPTION:200 |

*FIG. 4B*

START

S100

TASK A IS P-TASK OR S-TASK?

P-Task → S200

STORE EXECUTION REQUEST INFORMATION IN STORAGE UNIT

S-Task → S300

STORAGE PROCESSING OF S-TASK

END

*FIG. 5*

*FIG. 6*

| TASK NAME | PERIOD | GREATEST COMMON DIVISOR RELATIVE TO TASK A (PERIOD 15) |
|---|---|---|
| B | 10 | 5 |
| C | 30 | 15 |

*FIG. 7*

*FIG. 8*

EXECUTION INSTRUCTION

210 — APPLICATION

TASK

EXECUTION REQUEST INFORMATION 211

310

313

EXECUTION REQUEST INFORMATION

EXECUTION REQUEST INFORMATION

311

EXECUTION UNIT

STORAGE UNIT

STORAGE PROCESSING UNIT

312

STATUS MANAGEMENT UNIT

314

TASK CONTROL UNIT

*FIG. 9*

| TASK NAME | SET TIME TYPE (P or S) | CHANGED EXECUTION TIME | ORIGINAL EXECUTION TIME |
|-----------|------------------------|------------------------|-------------------------|
| TASK A | P | 2012/6/29/12:00 | 2012/6/29/11:28 |

*FIG. 10*

START

STATUS MANAGEMENT UNIT NOTIFIES
EXECUTION UNIT OF SCREEN STATE ⟋ S800

BACKLIGHT BEING LIT? ⟋ S810 — NO

YES ⟋ S820

REFER TO ORIGINAL EXECUTION
REQUEST INFORMATION STORED IN
STORAGE UNIT

REFER TO CHANGED EXECUTION
REQUEST INFORMATION STORED
IN STORAGE UNIT ⟋ S840

EXECUTION PROCESSING ⟋ S830

END

*FIG. 11*

APPLICATION

TASK

210

EXECUTION INSTRUCTION

EXECUTION REQUEST
INFORMATION

211

310

313

EXECUTION
REQUEST
INFORMATION

EXECUTION
REQUEST
INFORMATION

311

EXECUTION
UNIT

STORAGE
UNIT

STORAGE
PROCESSING
UNIT

331  312

CONTROL POLICY
CHANGE UNIT

TASK CONTROL UNIT

EXTERNAL
INPUT

*FIG. 12*

FIG. 13

START

S400

ACTIVATED IN
RESPONSE TO TASK
EXECUTION REQUEST?

NO

YES

ACQUIRE EXECUTION TIME OF
EXISTING S-TASK FROM STORAGE
UNIT

S430

S440

TASK EXISTS WHOSE
EXECUTION TIME HAS
PASSED?

NO

YES

S450

REWRITE EXECUTION TIME OF S-
TASK WITH EXECUTION TIME OF
PERIODICALLY-EXECUTED TASK,
IMMEDIATELY SUBSEQUENT TO
CURRENT TIME, AND STORE SAME
IN STORAGE UNIT

S410

EXECUTION INSTRUCTION

S420

EXECUTE TASK

END

*FIG. 14*

(A)

COMMUNICATION START
PERIOD OF TIME Tar

TASK A

TASK A EXECUTION TIME Ta | COMMUNICATION | COMMUNICATION | TIME
STARTS | ENDS

COMMUNICATION START
PERIOD OF TIME Tbr

TASK B

TASK B EXECUTION TIME Tb | COMMUNICATION | COMMUNICATION ENDS | TIME
STARTS

(B)

COMMUNICATION START
PERIOD OF TIME Tar

TASK A

TASK A EXECUTION TIME Ta | COMMUNICATION | COMMUNICATION ENDS | TIME
STARTS

COMMUNICATION START
PERIOD OF TIME Tbr

TASK B

TASK B EXECUTION TIME | COMMUNICATION | COMMUNICATION ENDS | TIME
Ta+Tar-Tbr | STARTS

*FIG. 15*

START

S700

TASK THAT
REQUIRES          NO
COMMUNICATION?

S720

SET EXECUTION TIME OF TASK, OF
ALL TASKS INSIDE STORAGE UNIT,
EXECUTED IMMEDIATELY SUBSEQUENT
TO EXECUTION TIME OF TASK A

YES          S710

PROCEED TO STEP S301

END

*FIG. 16*

EXECUTION INSTRUCTION

EXECUTION
REQUEST
INFORMATION

220 — STORAGE
PROCESSING
APPLICATION

211

TASK
APPLICATION

210

310

TASK CONTROL UNIT

313

EXECUTION
REQUEST
INFORMATION

EXECUTION REQUEST
INFORMATION

EXECUTION
UNIT

STORAGE
UNIT

312

*FIG. 17*

EXECUTION INSTRUCTION

210

APPLICATION

TASK

211

EXECUTION REQUEST
INFORMATION

310

313

EXECUTION
REQUEST
INFORMATION

EXECUTION
REQUEST
INFORMATION

311

EXECUTION
UNIT

STORAGE
UNIT

STORAGE
PROCESSING
UNIT

312

BROADCAST
RECEPTION
DETECTION UNIT

317

TASK CONTROL UNIT

*FIG. 18*

START

S800

BROADCAST RECEPTION
DETECTED? ——— NO

YES

S810

S-TASK EXISTS IN STORAGE
UNIT WHOSE EXECUTION
REQUEST INFORMATION IS
NOT YET ACQUIRED? ——— NO

YES

S820

ACQUIRE EXECUTION REQUEST
INFORMATION OF S-TASK FROM
STORAGE UNIT

S830

NO ——— EXECUTION TIME HAS
PASSED? ——— NO

YES

S840

PERIODIC TASK?

S850

YES

WRITE, OVER EXECUTION REQUEST
INFORMATION, TIME CALCULATED
USING EXPRESSION 1

S860

WRITE, OVER EXECUTION
REQUEST INFORMATION, TIME
CALCULATED USING
EXPRESSION 2

END

FIG. 19

## INTERNATIONAL SEARCH REPORT

| International application No. |
| --- |
| PCT/JP2013/067676 |

A. CLASSIFICATION OF SUBJECT MATTER
*G06F9/48*(2006.01)i

According to International Patent Classification (IPC) or to both national classification and IPC

B. FIELDS SEARCHED

Minimum documentation searched (classification system followed by classification symbols)
G06F9/48

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2010-160599 A  (Yamatake Corp.),<br>22 July 2010 (22.07.2010),<br>paragraphs [0012] to [0058]; fig. 1 to 14<br>(Family: none) | 1-3<br>4,5,8,11,12<br>6,7,9,10,13,<br>14 |
| Y | JP 2005-43959 A  (Toshiba Corp.),<br>17 February 2005 (17.02.2005),<br>paragraphs [0047] to [0120]; fig. 25 to 63<br>& US 2005/0060709 A1    & EP 1501013 A2<br>& KR 10-2005-0011689 A   & CN 1577278 A | 4,5,8 |
| Y | JP 8-255088 A  (Mitsubishi Electric Corp.),<br>01 October 1996 (01.10.1996),<br>paragraphs [0021] to [0048]; fig. 1 to 11<br>(Family: none) | 11 |

| ☒ | Further documents are listed in the continuation of Box C. | ☐ | See patent family annex. |
| --- | --- | --- | --- |

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    11 September, 2013 (11.09.13) | Date of mailing of the international search report<br>    24 September, 2013 (24.09.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

25

**INTERNATIONAL SEARCH REPORT**

International application No.

PCT/JP2013/067676

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 5-88917 A  (NEC Software Kobe Ltd.),<br>09 April 1993 (09.04.1993),<br>paragraphs [0006] to [0015]; fig. 1 to 4<br>(Family: none) | 12 |

Form PCT/ISA/210 (continuation of second sheet) (July 2009)

**EP 2 869 196 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8255088 A